# EUROPEAN PATENT SPECIFICATION

(11) **EP 0 315 149 B1**
(45) Date of publication and mention of the grant of the patent: **01.09.1993**
(21) Application number: 88118259.6
(22) Date of filing: 02.11.1988
(51) Int. Cl.: C08F 8/30

(54) **Process for the preparation of imidized acrylic polymers**
Verfahren zur Herstellung von imidierten Acrylpolymere
Procédé de préparation des imides de polymères acryliques

(30) Priority: 04.11.1987 IT 2250587
(43) Date of publication of application: 10.05.1989
(73) Proprietor: ELF ATOCHEM ITALIA S.r.l., 20159 Milano (IT)
(72) Inventor: Canova, Luciano, Dr., I-28100 Novara (IT); Giannini, Umberto, Dr., I-20100 Milano (IT); Albizzati, Enrico, Dr., I-28041 Arona (NO) (IT)
(74) Representative: Weinhold, Peter, Dr.

(56) References cited:
- US-A- 3 632 797

## Description

The present invention relates to a process for the preparation of imidized acrylic polymers.

By the term "acrylic polymers or acrylic resins" as used in the present description and claims, the homopolymers and copolymers and mixtures thereof of alkyl esters of methacrylic or acrylic acid are intended, wherein the alkyl group contains from 1 to 8, preferably 1 to 4, carbon atoms.

Examples of esters of the methacrylic or acrylic acid are: methyl methacrylate, ethyl methacrylate, isopropyl methacrylate, sec.-butylmethacrylate, tert.-butyl methacrylate, methyl acrylate, ethyl acrylate, butyl acrylate, isopropyl acrylate, etc.

The acrylic polymers or acrylic resins may contain units derived from other monomers containing double bonds such as styrene, α-methylstyrene, acrylonitrile, acrylamide, etc., or from monomers having a double unsaturation such as for instance butadiene. Such monomer units are usually present in amounts of less than 50, preferably less than 20 mol percent, based on the total amount of (meth )acrylic and other monomer units.

Furthermore these polymers have an inherent viscosity, measured in N,N'-dimethylformamide at 30°C, between 0.01 and 7, and preferably between 0.2 and 2.

The main drawback shown by these polymers is that they have a rather low glass transition temperature (Tg) such as to limit significantly their use.

It is known from U. S. Patent No. 3,284,425 or from UK Patent No. 926,629 to increase the Tg of these polymers by imidation carried out by reaction with ammonium hydroxide, ammonium phosphate or alkyl amines or by partial reaction of the acrylic resin itself with ammonium hydroxide followed by reaction with an alkylamine.

These processes have many drawbacks: they are performed in an autoclave, they are of the discontinuous type, they require heating and reaction times generally very long, and involve the use of a solvent for the dissolution or suspension.

In order to overcome these drawbacks German patent No. 1,077,872 suggests a process for the preparation of acrylic polymers imidized in an extruder, using ammonia in aqueous phase.

The product thus obtained, however, shows a poor thermal stability and requires further treatments before being used in the transformation.

In U.S. Patent No. 4,246,374 a process is described for preparing imidized acrylic polymers by direct reaction in an extruder of the acrylic resin with ammonia or with a primary amine under substantially anhydrous conditions. The product thus obtained has a good thermal stability but the process conditions for its preparation are particularly burdensome in that it is necessary to work at temperatures up to 450°C and under pressures up to 1,000 atmospheres.

US-patent No. 3,632,797 describes a process for the preparation of polyimides by dissolving polymers containing carboxy or anhydride groups, i.e. polyacrylic or polymethacrylic acid, in a monoamide and then reacting the solution by heating at a temperature at 150-250°C.

It has now been discovered (in accordance with the present invention) that the above-mentioned drawbacks can be overcome by preparing imidized acrylic polymers by a reaction between acrylic resins consisting of homopolymers or copolymers of C₁-C₈ alkyl esters of methacrylic or acrylic acid and at least one modifier of the formula: 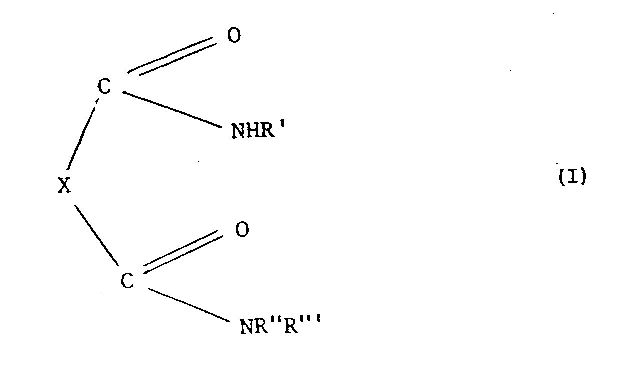
wherein R', R'' and R''', the same or different, are hydrogen or an alkyl, cycloalkyl, aryl, alkylaryl, or arylalkyl radical having from 1 to 20 carbon atoms and X is a direct bond or is selected from straight or branched alkylene radicals containing from 1 to 12 carbon atoms, cycloalkylene radicals containing from 5 to 12 carbon atoms, or arylene radicals containing from 6 to 12 carbon atoms or from the corresponding radicals heterosubstituted containing as substituents heteratoms of at least one hydrogen and/or inserted between two adjacent carbon atoms. Examples of such heteroatoms are nitrogen, oxygen, sulphur, halogen, etc.

Preferred groups R'_{,} R'' band R''' are (beside hydrogen): alkyl groups having 1 to 8, particularly 1 to 4 carbon atoms, such as e.g. methyl, ethyl, n-propyl, i-propyl, n-butyl, i-butyl and sec.-butyl;
cycloalkyl groups having 3 to 8 carbon atoms, such as e.g. cyclopentyl and cyclohexyl;
aryl groups having 6 to 14 carbon atoms, such as e.g. phenyl, naphthyl and biphenylyl;
alkylaryl groups having 7 to 15 carbon atoms, such as e.g. tolyl, xylyl,trimethylphenyl, ethylphenyl, propylphenyl, and methylnaphthyl;
arylalkyl groups having 7 to 15 carbon atoms, such as e.g. benzyl, phenethyl and naphthylmethyl.

Preferred groups X (except for X being a direct bond between the carbonyl groups) include the following:
straight or branched alkylene radicals having 1 to 6 carbon atoms, such as e.g. methylene, ethylene, propylene, butylene, pentylene and hexylene;
cycloalkylene radicals containing 5 to 8 carbon atoms, such as e.g. cyclopentylene and cyclohexylene;
arylene radicals containing 6 to 10 carbon atoms, such as e.g. phenylene and naphthylene.

In said radicals e.g. up to 3 carbon atoms different from those directly attached to the amide functionality may be replaced by groups such as e.g. -O-, -NH-, -N(CH₃)- and -S-.

Alternatively or additionally said groups may have up to 3 hetero-atom containing substituents, e.g. one or more of OH, OR, (R=C₁₋₄ alkyl), and halogen (e.g. F, Cl, Br and J).

Examples of modifiers of the formula (I) are: oxamide, malonamide, succinamide, adipamide, N-methyloxamide, N'N'-dimethyloxamide, N,N'-dimethylsuccinamide, N,N'-dimethylmalonamide, diamides of phthalic acid, etc.

The imidized acrylic polymers obtained by the process of the present invention are thermally stable, have an inherent viscosity, in N,N'-dimethylformamide (DMF) at 30°C in 0.25% by weight solution, of between 0.01 and 7, and preferably between 0.2 and 2, and a nitrogen content of between 0.1 and 9% by weight, and preferably between 0.5 and 7%.

A method for preparing the imidized acrylic polymers of the present invention comprises reacting an acrylic resin with a modifier of formula (I) under atmospheric pressure or subatmospheric pressure, (e.g. only a little lower than atmospheric pressure), and at a temperature higher than the melting temperature of the acrylic resin. Room pressure and reaction temperatures between 200° and 350°C, and preferably between 220° and 280°C, are preferred.

The modifier is used in amounts between 5 and 60% by mols based on the (meth)acrylicmonomeric unit, and preferably between 10 and 50%.

According to a preferred embodiment of the process of the present invention, the reaction between the acrylic resin and the modifier of the formula (I) is carried out in the presence of basic, acid and/or transesterification catalysts.

These catalysts are high boiling products stable under the reaction conditions. They may be selected preferably from among the tertiary amines, such as tricyclohexylamine, 1,1,3,3-tetramethylguanidine, 1,3-diphenylguanidine, quinoline, isoquinoline, 4-benzylpyridine, 4-phenylpyridine, 2,3-benzodiazine, 1,4-benzodiazine, 1-benzazine, 1,3-benzodiazine, N,N′-dicyclohexylcarbodiimide, 2,2′-bipyridyl, 2,3′-bipyridyl, 2,4′-bipryidyl, or from Sb₂O₃, Ti(OC₄H₉)₄, NaNH₂, SnO₂, sodium or potassium alcoholates, manganese acetate, etc.

The catalysts may be used in amounts up to 30% by weight, calculated on the total reaction mixture.

According to a further preferred embodiment of the process of the present invention, the reaction between the acrylic resin and the modifier of the formula (I) may be carried out in an extruder, in a mixer, or in similar apparatus suitable provided with degasing means.

The process of the present invention may be carried out using the acrylic resin either in the molten state, or dissolved in a suitable solvent for instance of the aromatic or cycloaliphatic type such as benzene, toluene, cyclohexane, etc.

The imidized acrylic polymers of the present invention may be processed by conventional transformation techniques for thermoplastic polymers, such as, for instance, extrusion, injection molding, etc., and may be used for the production of manufactured articles of any desired shape and size, optionally in admixture with other thermoplastic resins.

Furthermore, these imidized acrylic polymers may be used for preparing sheets, films, pipes, yarns, etc.

The imidized acrylic polymers obtained by the process of the present invention may be admixed with suitable additives, such as for instance anti-shock products, pigments, fibers, mineral fillers, flame retarders, stabilizers, lubricants, plasticizers, etc.

The imidized acrylic polymers of the present invention may be additioned with foaming agents and used in foamed form, optionally further admixed with fibers and/or inorganic fillers, to provide articles having a low density and high mechanical properties.

The glass transition temperature (Tg) is measured using the differential calorimeter and is the temperature corresponding to the inflection which appears in the thermogram when the thermal capacity of the material changes. The scanning velocity of the temperature is 20°C/minute and the measurement is carried out after a first heating up to 200°C and subsequent cooling.

In order to still better understand the present invention and to practice the same, some illustrative examples which however are not limitative are given below.

### Example 1

Into a glass reactor provided with stirrer and outlet for volatile compounds, 25 g of a polymethylmethacrylate having an inherent viscosity in chloroform of 1.6, and 11 g of oxamide are introduced at the same time, under nitrogen.

The whole is gradually heated until the mixture melts and thereafter up to 280°C while distilling and removing the volatile reaction products.

The reaction is continued at 280°C for 2 hours and thereafter a vacuum is applied by a mechanical pump for 15 minutes; the whole is cooled to 150°C and refluxed with nitrogen; and the reaction product is diluted with 50 ml of N,N′-dimethylformamide to obtain a solution from which the polymer is recovered by coagulation with methanol.

The thus-obtained product is filtered off, washed with ether, and dried in vacuo.

The polymer product has an inherent viscosity, in DMF at 30°C in a 0.25% by weight solution, of 0.57 and a glass transition temperature (Tg) = 126°C.

### Example 2

The operation is carried out according to the procedures of Example 1, using 12.8 g of malonamide.

The polymer thus obtained has an inherent viscosity of 0.42 and a Tg = 125°C.

## Claims

1. Process for the preparation of imidized acrylic polymers, comprising reacting acrylic resins consisting of homopolymers or copolymers of C₁-C₈ alkyl esters of methacrylic acid or acrylic acid with at least one modifier of the general formula (I): 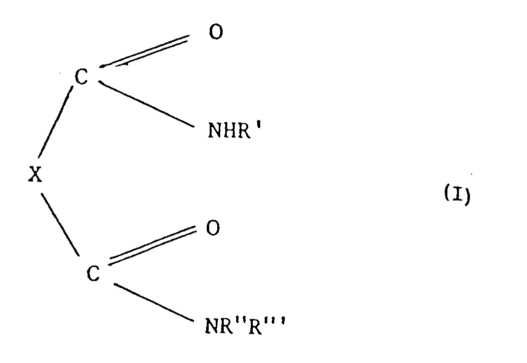 wherein R', R'', R''', the same or different, are hydrogen or an alkyl, cycloalkyl, aryl, arylalkyl or alkylaryl radical containing from 1 to 20 carbon atoms and X is a direct bond or is selected from straight or branched alkylene radicals containing from 1 to 12 carbon atoms, cycloalkylene radicals containing from 5 to 12 carbon atoms, arylene radicals containing from 6 to 12 carbon atoms and from the corresponding radicals which contain heteroatoms, either attached to at least one carbon atom and/or inserted between at least two adjacent carbon atoms.

2. Process according to claim 1, wherein the heteroatoms are selected from nitrogen, oxygen, sulphur and halogen.

3. Process according to claim 1 or 2, wherein the modifiers of formula (I) are selected from oxamide, malonamide, succinamide, adipamide, N-methyloxamide, N,N'-dimethyloxamide, N,N'-dimethylsuccinamide, N,N'-dimethylmalonamide, and diamides of phthalic acid.

4. Process according to any one of claims 1 to 3 wherein imidized acrylic polymers having an inherent viscosity, in 0.25% by weight solution in dimethylformamide at 30°C, of between 0.01 and 7, and a nitrogen content of between 0.01 and 9% by weight are prepared.

5. Process according to any one of claims 1 to 4, wherein the reaction of the acrylic resin with a modifier of formula (I) is carried out at atmospheric pressure or a little less than atmospheric pressure and at a temperature higher than the melting temperature of the acrylic resin.

6. Process according to claim 5, wherein the reaction is carried out at atmospheric pressure and at a temperature between 200 and 350°C.

7. Process according to claim 6, wherein the temperature is between 220 and 280°C.

8. Process according to any one of claims 5 to 7, wherein the modifier is used in amounts between 5 and 60% by moles, based on the acrylic monomer unit.

9. Process according to claim 8, wherein the modifier is used in amounts between 10 and 50% by moles.

10. Process according to any one of claims 5 to 9, wherein the reaction between the acrylic resin and the modifier of formula (I) is carried out in the presence of a basic, an acidic and/or a transesterification catalyst.

11. Process according to claim 10, wherein the catalyst is selected from tertiary amines, such as tricyclohexylamine, 1,1,3,3-tetramethylguanidine, 1,3-diphenylguanidine, quinoline, isoquinoline, 4-benzylpyridine, 4-phenylpyridine, 2,3-bensodiazine, 1,4-benzodiazine, 1-benzazine, 1,3-bensodiazine, N,N'-dicyclohexylcarbodiimide, 2,2'-bipyridyl, 2,3'-bipyridyl and 2,4'-bipyridyl, or Sb₂O₃, Ti(OC₄H₉)₄, NaNH₂, SnO₂, sodium and potassium alcoholates, and manganese acetate.

12. Process according to any one of claims 5 to 11, wherein the acrylic resin is used either in the molten state or dissolved in a solvent.

13. Process according to any one of claims 5 to 12, wherein the reaction between the acrylic resin and the modifier of formula (I) is carried out in an extruder, in a mixer or in a functionally similar apparatus provided with degasing means.

## Patentansprüche

1. Verfahren zur Herstellung imidierter Acrylpolymere, umfassend die Reaktion von Acrylharzen, die aus Homopolymeren oder Copolymeren von C₁-C₈-Alkylestern von Methacrylsäure oder Acrylsäure bestehen, mit wenigstens einem Modifiziermittel der allgemeinen Formel 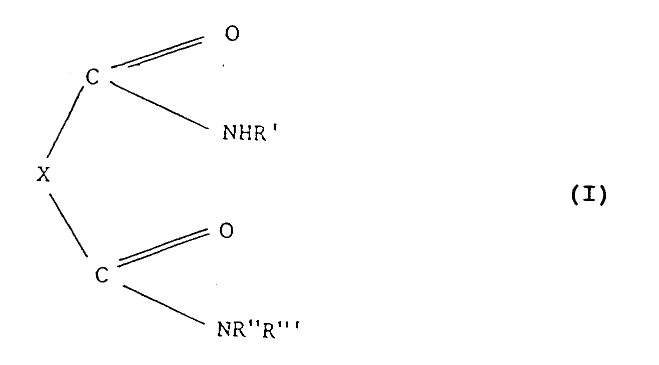 worin R', R'' und R''', die gleich oder verschieden sein können, Wasserstoff oder einen Alkyl-, Cycloalkyl-, Aryl, Arylalkyl- oder Alkylarylrest mit 1 bis 20 Kohlenstoffatomen bedeuten und X eine direkte Bindung ist oder ausgewählt ist aus geradkettigen oder verzweigtkettigen Alkylenresten mit 1 bis 12 Kohlenstoffatomen, Cycloalkylenresten mit 5 bis 12 Kohlenstoffatomen, Arylenresten mit 6 bis 12 Kohlenstoffatomen undr den entsprechenden Resten, die Heteroatome enthalten, die entweder an wenigstens ein Kohlenstoffatom gebunden sind und/oder zwischen wenigstens zwei nebeneinanderliegenden Kohlenstoffatomen inseriert sind.

2. Verfahren nach Anspruch 1, worin die Heteroatome ausgewählt sind aus Stickstoff, Sauerstoff, Schwefel und Halogen.

3. Verfahren nach Anspruch 1 oder 2, worin die Modifiziermittel der Formel (I) ausgewählt sind aus Oxamid, Malonamid, Succinamid, Adipamid, N-Methyloxamid, N,N'-Dimethyloxamid, N,N'-Dimethylsuccinamid, N,N'-Dimethylmalonamid und Diamiden der Phthalsäure.

4. Verfahren nach irgendeinem der Ansprüche 1 bis 3, worin imidierte Acrylpolymere mit einer inneren Viskosität, in einer Lösung von 0,25 Gew.-% in Dimethylformamid bei 30°C, zwischen 0,01 und 7, und einem Stickstoffgehalt zwischen 0,01 und 9 Gew.-% hergestellt werden.

5. Verfahren nach irgendeinem der Ansprüche 1 bis 4, worin die Reaktion des Acrylharzes mit einem Modifiziermittel der Formel (I) bei Atmosphärendruck oder geringfügig unter Atmosphärendruck und bei einer Temperatur, die höher als die Schmelztemperatur des Acrylharzes liegt, durchgeführt wird.

6. Verfahren nach Anspruch 5, worin die Reaktion bei Atmosphärendruck und bei einer Temperatur zwischen 200 und 350°c durchgeführt wird.

7. Verfahren nach Anspruch 6, worin die Temperatur zwischen 220 und 280°C liegt.

8. Verfahren nach irgendeinem der Ansprüche 5 bis 7, worin das Modifiziermittel in Mengen zwischen 5 und 60 Mol-%, bezogen auf die Acrylmonomereinheit, eingesetzt wird.

9. Verfahren nach Anspruch 8, worin das Modifiziermittel in Mengen zwischen 10 und 50 Mol-% eingesetzt wird.

10. Verfahren nach irgendeinem der Ansprüche 5 bis 9, worin die Reaktion zwischen dem Acrylharz und dem Modifiziermittel der Formel (I) in Gegenwart eines basischen, sauren und/oder eines Umesterungskatalysators durchgeführt wird.

11. Verfahren nach Anspruch 10, worin der Katalysator ausgewählt ist aus tertiären Aminen, beispielsweise Tricyclohexylamin, 1,1,3,3-Tetramethylguanidin, 1,3-Diphenylguanidin, Chinolin, Isochinolin, 4-Benzylpyridin, 4-Phenylpyridin, 2,3-Benzodiazin, 1,4-Benzodiazin, 1-Benzazin, 1,3-Benzodiazin, N,N'-Dicyclohexylcarbodiimid, 2,2'-Bipyridyl, 2,3'-Bipyridyl und 2,4'-Bipyridyl, oder Sb₂O₃, Ti(OC₄H₉)₄, NaNH₂, SnO₂, Natrium- und Kaliumalkoholaten, und Manganacetat.

12. Verfahren nach irgendeinem der Ansprüche 5 bis 11, worin das Acrylharz entweder in geschmolzenem Zustand oder in einem Lösungsmittel gelöst eingesetzt wird.

13. Verfahren nach irgendeinem der Ansprüche 5 bis 12, worin die Reaktion zwischen dem Acrylharz und dem Modifiziermittel der Formel (I) in einem Extruder, einem Mixer oder einer funktionell ähnlichen, mit einer Entgasungsvorrichtung ausgestatteten Vorrichtung erfolgt.

## Revendications

1. Procédé pour la préparation de polymères acryliques imidés, comprenant la réaction de résines acryliques consistant en homopolymères ou copolymères d'alkyl(en C₁-C₈)-esters d'acide acrylique ou méthacrylique avec au moins un agent modifiant présentant la formule générale (I): 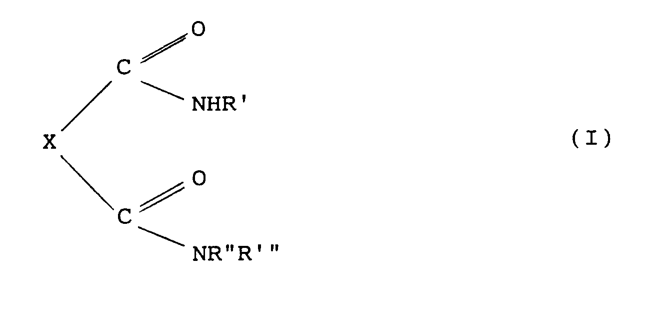 dans laquelle:
R', R'' et R''', identiques ou différents, sont un atome d'hydrogène ou un radical alkyle, cycloalkyle, aryle, alkylaryle ou arylalkyle ayant de 1 à 20 atomes de carbone; et
X est une liaison directe ou est choisi dans le groupe comprenant des radicaux alkylènes à chaîne droite ou ramifiée contenant de 1 à 12 atomes de carbone, des radicaux cycloalkylènes contenant de 5 à 12 atomes de carbone, des radicaux arylènes contenant de 6 à 12 atomes de carbone ou à partir des radicaux correspondants contenant des hétéroatomes, attachés à au moins un atome de carbone et/ou insérés entre deux atomes de carbone adjacents.

2. Procédé selon la revendication 1, dans lequel les hétéroatomes sont choisis dans le groupe comprenant azote, oxygène, soufre et halogène.

3. Procédé selon la revendication 1 ou 2, dans lequel les agents modifiants de formule (I) sont choisis dans le groupe comprenant oxamide, malonamide, succinamide, adipamide, N-méthyloxamide, N,N'-diméthyloxamide, N,N'-diméthylsuccinamide, N,N'-diméthylmalonamide, et les diamides de l'acide phtalique.

4. Procédé selon l'une quelconque des revendications 1 à 3, dans lequel sont préparés des polymères acryliques imidès qui ont une viscosité inhérente dans une solution de formaldéhyde à 0,25% en poids à 30°C, comprise entre 0,01 et 7, et une teneur en azote comprise entre 0,01 et 9% en poids.

5. Procédé selon l'une quelconque des revendications 1 à 4 dans lequel la réaction de la résine acrylique avec l'agent modifiant de formule (I) est réalisée à la pression atmosphérique ou à une pression légèrement inférieure à la pression atmosphérique et à une température supérieure à la température de fusion de la résine acrylique.

6. Procédé selon la revendication 5, dans lequel la réaction est réalisée à la pression atmosphérique et à une température comprise entre 200 et 350°C.

7. Procédé selon la revendication 6, dans lequel la température est comprise entre 220 et 280°C.

8. Procédé selon l'une quelconque des revendications 5 à 7 dans lequel l'agent modifiant est utilisé en des proportions comprises entre 5 et 60% en moles, par rapport aux unités de monomère acrylique.

9. Procédé selon la revendication 8, dans lequel l'agent modifiant est utilisé en des proportions comprises entre 10 et 50% en moles.

10. Procédé selon l'une quelconque des revendications 5 à 9, dans lequel la réaction entre la résine acrylique et l'agent modifiant de formule (I) est réalisée en présence d'un catalyseur de transestérification et/ou basique et/ou acide.

11. Procédé selon la revendication 10, dans lequel le catalyseur est sélectionné dans le groupe des amines tertiaires, tels que tricyclohexylamine, 1,1,3,3-tétraméthylguanidine, 1,3-diphénylguanidine, quinoline, isoquinoline, 4-benzylpyridine, 4-phénylpyridine, 2,3-benzodiazine, 1,4-benzodiazine, 1-benzazine, 1,3-benzodiazine, N,N'-dicyclohexylcarbodiimide, 2,2'-bipyridyle, 2,3'-bipyridyle, 2,4'-bipyridyle ou à partir de Sb₂O₃, Ti(OC₄H₉)₄, NaNH₂, SnO₂, ou des alcoolates de sodium ou de potassium, et l'acétate de manganèse.

12. Procédé selon l'une quelconque des revendications 5 à 11, dans lequel la résine acrylique est utilisée soit dans un état de fusion soit dissoute dans un solvant.

13. Procédé selon l'une quelconque des revendications 5 à 12, dans lequel la réaction entre la résine acrylique et l'agent modifiant de formule (I) est réalisée dans un extrudeur, dans un mélangeur ou dans un appareil fonctionnant de façon similaire pourvu d'un moyen de dégazage.
